# NEUE EUROPÄISCHE PATENTSCHRIFT

(11) **EP 1 491 082 B2**
(45) Veröffentlichungstag und Bekanntmachung des Hinweises auf die Entscheidung über den Einspruch: **19.08.2009**
(45) Hinweis auf die Patenterteilung: 31.05.2006
(21) Anmeldenummer: 04013454.6
(22) Anmeldetag: 08.06.2004
(51) Int. Cl.: A01D 41/12, A01F 12/44

(54) **Verfahren zur Reinigung der Arbeitsorgane innerhalb einer landwirtschaftlichen Arbeitsmaschine**
Process for cleaning the working tools in an agricultural machine
Procédé pour le nettoyage des outils de travail dans une machine agricole

(30) Priorität: 25.06.2003 DE 10328735
(43) Veröffentlichungstag der Anmeldung: 29.12.2004
(73) Patentinhaber: CLAAS Selbstfahrende Erntemaschinen GmbH, 33428 Harsewinkel (DE)
(72) Erfinder: Fitzner, Werner, 48336 Sassenberg (DE)

(56) Entgegenhaltungen:
- EP- - 1 425 952
- EP- - 1 425 954
- EP-A- 0 104 676
- DE- - 10 030 262
- GB-A- 376 781
- US-A- 2 501 906
- US-A- 3 199 125

## Beschreibung

Die Erfindung betrifft ein Verfahren zur Reinigung der Organe innerhalb einer landwirtschaftlichen Arbeitsmaschine, insbesondere eines selbstfahrenden Mähdreschers.
Innerhalb eines Mähdreschers sind unterschiedliche Organe, wie beispielsweise Dreschkörbe, Siebe, Vorbereitungsböden und Hordenschüttler, angeordnet. Diese Organe werden während des Erntebetriebes durch das zu bearbeitende Erntegut stark beansprucht und erfahren dementsprechend eine starke Verschmutzung. Um ein optimales Dreschen, Abscheiden und Weiterfördern zu gewährleisten, müssen die Organe sauber gehalten werden.

Aus der EP 0 104 676 ist ein Verfahren zur Einstellung eines Siebes in einem Mähdrescher bekannt geworden, welches in Abhängigkeit der Istwerte von den Sollwerten bezogen auf die Einstellung des Siebes eine Verstellung des Siebes vornimmt um hierdurch die Zwischenräume der Lamellen innerhalb des Siebes zu reinigen.
Auf diese Weise soll der Schmutz aufgrund des weiter geöffneten Siebes aus diesem herausfallen, wodurch zugleich Beschädigungen durch Fremdkörper an dem Sieb reduziert werden sollen.
Nachteilig an dieser Erfindung ist eine eingeschränkte Nutzbarkeit bei feuchtem Erntegut. Dieses haftet an den Lamellen aufgrund der Feuchte und fällt selbst bei weit geöffneter Siebstellung nicht aus den Zwischenräumen des Siebes heraus. Zudem reicht bei hartnäckigen Verschmutzungen ein bloßes Verstellen der Siebweite nicht aus, um die Verschmutzungen restlos zu beseitigen. Vielmehr können sich Erntegut oder Fremdkörper zwischen den Lamellen festsetzen, so dass ohne weitere äußere Einwirkung die Beseitigung nicht möglich ist. Letztlich bezieht sich die Reinigung ausschließlich auf die Siebe und erstreckt sich nicht auf andere Arbeitsorgane innerhalb des Mädreschers, wodurch unmittelbar gesäuberte Siebe direkt nach der Reinigung durch den an anderen Organen haftenden Schmutz erneut verschmutzt werden und sich auf diesem Wege zusetzen.

Der Erfindung liegt daher die Aufgabe zugrunde, ein Verfahren zur Reinigung mehrerer Organe innerhalb einer landwirtschaftlichen Maschine, insbesondere eines selbstfahrenden Mähdreschers, zu schaffen, welches das eingangs beschriebene Verfahren verbessert und zusätzlich eine Entlastung des Fahrers der landwirtschaftlichen Maschine herbeiführt.

Erfindungsgemäß wird die Aufgabe durch ein Verfahren zur Reinigung der Organe innerhalb einer landwirtschaftlichen Arbeitsmaschine gemäß den kennzeichnenden Merkmalen des Anspruchs 1 gelöst.

Dadurch kann ein exakter Reinigungsablauf bestimmt werden, ohne dass es dabei zu Erntegutverlusten kommt.

Dadurch, dass das zumindest eine Arbeitsorgan das Vorsatzgerät und dessen Betriebszustand der Stillstand des Vorsatzgerätes ist, wird gewährleistet, dass kein neues Erntegut der landwirtschaftliche Erntemaschine zugeführt wird. Hierdurch kann der Reinigungsvorgang, der vornehmlich durch ein Ausblasen des Maschineninnenraums vollzogen wird, einsetzen, so dass kein ausgedroschenes Erntegut aus der Maschine herausgetragen und der Erntegutverlust auf diese Weise niedrig gehalten wird.

Als ein weiteres Arbeitsorgan kommt die Korntankentleervorrichtung in Betracht, wobei dessen Betriebszustand das Betreiben der Korntankentleervorrichtung ist. Die Reinigung bei dem Betrieb der Korntankentleervorrichtung vermeidet gleichermaßen den Erntegutverlust. So kann eine Reinigung im Stand der landwirtschaftlichen Arbeitsmaschine und bei fehlendem Durchsatz unbedenklich erfolgen, da dann das bereits abgeerntete und im Korntank befindliche Erntegut durch ein Ausblasen nicht mehr gefährdet wird und aufgrund des fehlenden Durchsatzes neues Erntegut nicht in den Maschineninnenraum gelangt.

Die Reinigung kann in Abhängigkeit von unterschiedlichen Parametern, wie zum Beispiel Schneidwerksbetrieb, Korntankentleerungsbetrieb, Durchsatzmenge, Stellung der Organe, Erntegutart oder Feuchtigkeitsverhältnisse durchgeführt werden. Die Kombination der Parameter miteinander ist hierbei an die individuellen Anforderungen anpassbar. So kann aufgrund einer Veränderung der Parameter eine unmittelbare Einstellung vorgenommen werden, die auf die konkreten Verhältnisse abgestimmt ist, was eine Optimierung des Reinigungsvorganges zur Folge hat.

Um den Fahrer der landwirtschaftlichen Erntemaschine zu Entlasten und ein Reinigen zu dem bestmöglichen Zeitpunkt zu gewährleisten, kann die Reinigung selbsttätig erfolgen, indem unterschiedliche Sensoren, wie beispielsweise optische Schmutzsensoren, Drucksensoren oder Erntegutverlustsensoren, innerhalb der landwirtschaftlichen Maschine angeordnet sind und die Parameter erfassen und an eine Steuereinheit weiterleiten. Von dort aus kann die Reinigung automatisch eingeleitet werden.

Um den Fahrer die Möglichkeit einer erforderlichen "Zwischenreinigung" aufgrund zu hohem Schmutzanteils zu belassen, kann er alternativ zur selbsttätig einsetzenden Reinigung die Reinigung auch manuell betätigen.

Indem die Reinigung durch eine Erhöhung der Gebläsedrehzahl und/oder bei einer Verstellung der Organe erfolgt, kann auf technisch und konstruktiv einfache Weise der Innenraum der Maschine gesäubert werden.
Durch die Verstellung der Organe, wie zum Beispiel die Siebe, wird vor dem Einsetzen des eigentlichen Reinigungsvorganges - der durch die Erzeugung von Winden erfolgt - der Schmutz bereits aufgelockert, was das Ausblasen vereinfacht.

Durch das Verfahren der Organe nach dem Reinigungsvorgang in Ihre Ursprungsposition, d.h. die Position, die das jeweilige Organ während des Arbeitsbetriebes hatte, wird dem Fahrer ein zeitaufwendiges Neueinstellen der Organe, welches die Eingabe von Erntegutart, Feuchtigkeitsverhältnisse etc. erfordern würde, erspart.

Der Reinigungsvorgang kann auch während des Einstellens der Organe erfolgen und auch während des Betriebes der Organe, jedoch ohne Durchsatz. Durch die ständige Bewegung wird der Schmutz gelockert und zusätzlich durch das Ausblasen entfernt.

Um eine konstante Reinigung zu erreichen, kann der Reinigungsvorgang in zeitlichen Intervallen erfolgen. Hierdurch wird eine Anhäufung von Schmutz durch den längeren Einsatz ohne Reinigung vermieden.

Die aus wenigstens einem Gebläse bestehende Reinigungseinrichtung kann an unterschiedlichen Stellen innerhalb der landwirtschaftlichen Arbeitsmaschine angeordnet sein. Zudem können mehrere Reinigungseinrichtungen, insbesondere an den unterschiedlichen verschmutzungsanfälligen Stellen, integriert werden. Auf diese Weise kann eine effektive und zielgerichtete Reinigung des gesamten Maschineninnenraums durchgeführt werden.

Weitere vorteilhafte Ausgestaltungen sind Gegenstand weiterer Unteransprüche und werden nachfolgend anhand von Zeichnungen näher erläutert.

Es zeigen
- Figur 1: eine schematische Seitenansicht eines Mähdreschers mit Arbeitsorganen und der Reinigungseinrichtung
- Figur 2: ein Flussdiagramm nach dem das erfindungsgemäße Verfahren arbeitet
- Figur 3: ein alternatives Flussdiagramm des erfindungsgemäßen Verfahrens

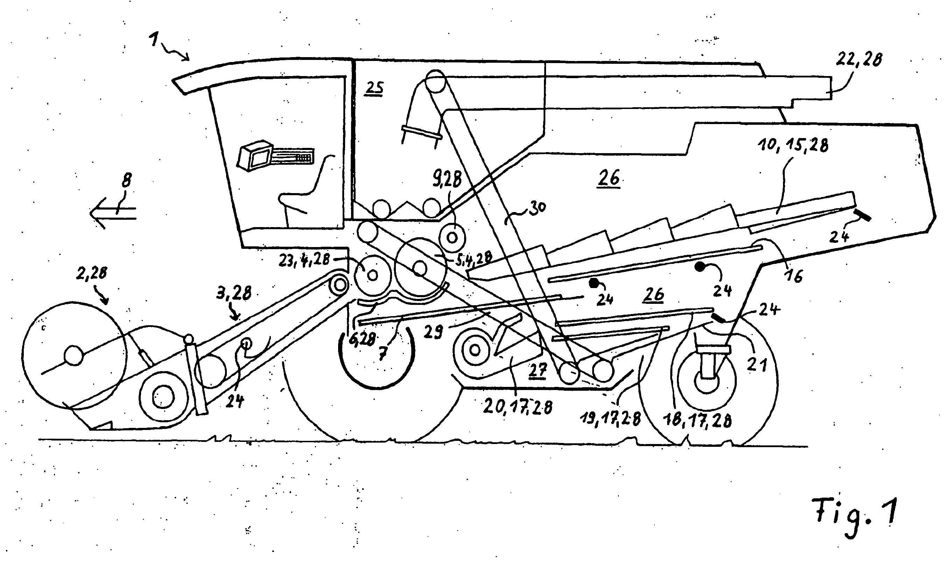

In der Figur 1 ist ein schematischer Schnitt durch einen Mähdrescher 1 dargestellt, Im vorderen Bereich des Mähdreschers 1 wird das Erntegut durch das Vorsatzgerät 2 geschnitten und über den Schrägförderer 3 den nachfolgenden Dreschorganen 4 zugeführt. Dort wird der Erntegutstrang von der Dreschtrommel 5 beaufschlagt, wodurch die Körner hiervon getrennt werden und durch die Dreschkorböffnungen auf den unterhalb des Dreschkorbes 6 angeordneten Vorbereitungsboden 7 fallen. Vom Vorbereitungsboden 7 aus werden die Körner entgegen der Fahrtrichtung 8 des Mähdreschers 1 durch Schüttelbewegungen weitergefördert. Der Hauptstrom des Erntegutes, welches vorwiegend aus Ernteguthalmen besteht, wird zwischen der Dreschtrommel 5 und dem Dreschkorb 6 hindurchgeführt und durch die nachfolgend angeordnete Leittrommel 9 an die Trenneinrichtung 10 weitergeleitet. In der Figur 1 ist die Trenneinrichtung 10 als ein mögliches Ausführungsbeispiel als stufenförmiger Hordenschüttler 15 ausgeführt. Die Trenneinrichtung 10 kann aber auch als im Ausführungsbeispiel nicht näher dargestellte Axialtrommel ausgebildet sein. Durch die Schwingbewegungen des Hordenschüttlers 15 werden weitere im Erntegutstrang enthaltene Körner und Ähren abgeschieden und durch Öffnungen innerhalb des Hordenschüttlers 15 dem Rücklaufboden 16 zugeführt. Von dort aus werden die Körner und Ähren in Fahrtrichtung 8 zurück an den Vorbereitungsboden 7 übergeben.
Sowohl die am Dreschkorb 6 getrennten Körner als auch das über den Rücklaufboden 16 übergebene Erntegut wird sodann den Reinigungsaggregaten 17 übergeben, während die Ernteguthalme an das Ende des Hordenschüttlers 15 gefördert werden und aus dem hinteren Teil des Mähdreschers 1 aus dem Mähdrescher 1 heraus auf dem Boden fallen.
Die Reinigungsaggregate 17 bestehen im zugrundeliegenden Ausführungsbeispiel, aus dem Obersieb 18 und dem Untersieb 19 sowie dem Reinigungsgebläse 20. Das Ober- 18 und Untersieb 19 ist aus verstellbaren Lamellen zusammengesetzt, wobei der durch das Reinigungsgebläse 20 erzeugte Luftstrom diese Lamellen und das von dem Vorbereitungsboden 7 auf das Obersieb 18 fallende Erntegut gleichfalls durchsetzt, wodurch leichte Nichtkornbestandteile aus dem Mähdrescher 1 hinausbefördert werden. Schwerere Erntegutbestandteile hingegen fallen auf das Obersieb 18 und werden dort durch Schüttelbewegungen bearbeitet. Die auf diese Weise abgeschiedenen Körner werden über ein Leitblech 21 einen Elevator 30 zugeführt, über den die Körner in den Korntank 25 gefördert werden. Die im Korntank 25 angesammelten Körner können dann mittels einer Korntankentleervorrichtung 22 beispielsweise auf ein nicht abgebildetes Transportfahrzeug abgetankt werden. Soweit Ähren nicht durch das Obersieb 18 in Einzelkornbestandteile zerlegt und abgeschieden werden können, werden diese Bestandteile durch die Schüttelbewegung des Obersiebes 18 an das Siebende befördert und gelangen von dort über ein Leitblech 21 als Überkehr über einen weiteren Elevator 29 zur Vorbeschleunigungstrommel 23 und durchlaufen den Dresch- und Abscheideprozess ein zweites Mal.
Es liegt im Rahmen der Erfindung an unterschiedlichen Stellen des Mähdreschers 1 Sensoren 24 einzusetzen, die beispielsweise den Verschmutzungsgrad innerhalb des Mähdreschers 1 erfassen. Gleichfalls können Drucksensoren 24 an verschmutzungsempfindlichen Stellen innerhalb des Mähdreschers angeordnet werden, die beispielsweise die Verstopfungen innerhalb der Siebe 18, 19 sensieren. Zur Erkennung des Erntegutdurchsatzes können allgemein bekannte Sensoren 24 verwendet werden, die die Schichtdicke im Einzugskanal messen. Aufgrund der starken Verschmutzung steigt der Erntegutverlust, da die Körner nicht mehr optimal abgeschieden werden und teilweise nicht mehr durch die Sieböffnungen gelangen können und über die Reinigungseinrichtung hinweg als Verlust aus dem Mähdrescher 1 fallen. Insofern können allgemein bekannte Verlustsensoren 24 - meist als Prallplatten ausgeführt - die Anzahl der herausfallenden Körner sensieren wodurch gleichfalls Rückschlüsse auf die Verschmutzung gezogen werden können.
Die durch die Sensoren 24 generierten Signale können dann automatisch einen Reinigungsvorgang auslösen oder dem Fahrer der landwirtschaftlichen Arbeitsmaschine in der Fahrerkabine anzeigen, dass er möglichst zeitnah einen Reinigungsdurchlauf einzuleiten hat.
Die Reinigung erfolgt in Form eines Ausblasens des Maschineninnenraums 26. Der hierfür erforderliche Windstrom wird durch das Reinigungsgebläse 20 erzeugt. Der Antrieb des Reinigungsgebläses 20 kann hierfür in Abhängigkeit von der Drehzahl der Dreschorgane 4 oder völlig unabhängig von anderen Maschinenkomponenten ausgeführt sein.
Um ein möglichst effektives Reinigen zu gewährleisten, können die Sieböffnungen während des Reinigens verstellt werden, so dass der zwischen den Lamellen festsitzende Schmutz durch ein Erweitern der Sieböffnungen gelockert wird.
Ebenso können sämtliche Organe innerhalb des Mähdreschers 1 in Betrieb sein um Resterntegutbestandteile leichter durch die Luftströmung außerhalb des Maschinenbereichs befördern zu können.
Es ist gleichfalls denkbar mehrere Reinigungsgebläse an unterschiedlichen Stellen innerhalb des Mähdreschers zu positionieren.

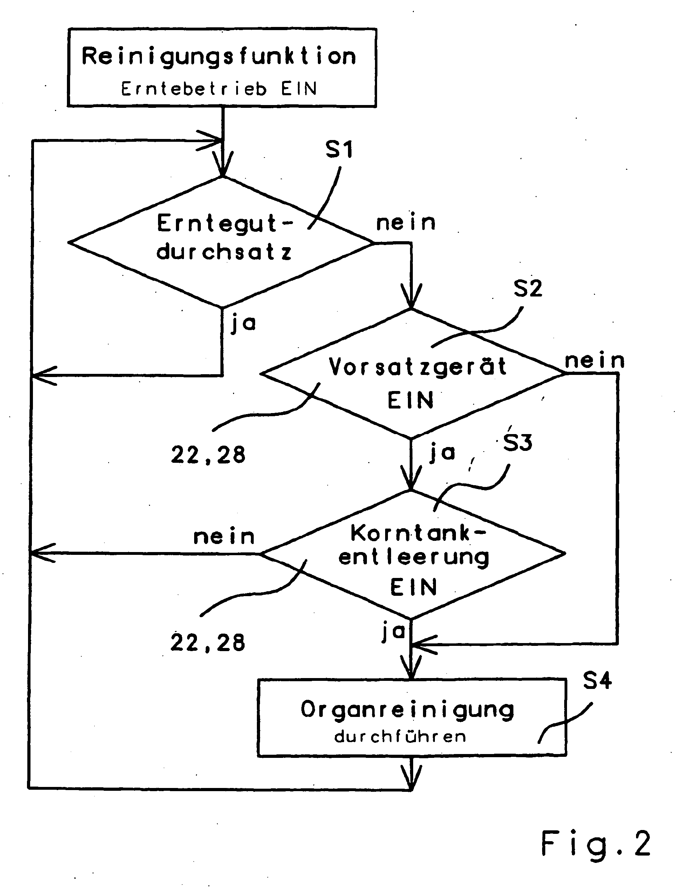

Figur 2 stellt ein Flussdiagramm dar, wonach das erfindungsgemäße Verfahren arbeitet.
Der Reinigungsvorgang erfolgt in Abhängigkeit von zuvor definierten Betriebszuständen eines oder mehrerer Arbeitsorgane 28. Als Arbeitsorgane 28 kommen beispielsweise die Dreschorgane 4, die Dreschtrommel 5, die Leittrommel 9, die Trenneinrichtung 10, die Reinigungsaggregate 17, 18, 19 sowie die Vorbeschleunigungstrommel 23 in Betracht. Als wesentliche Arbeitsorgane 28 sind das Vorsatzgerät 2 und die Korntankentleervorrichtung 22 zu betrachten, wobei der Betriebszustand des Vorsatzgerätes 2 der Stillstand des Vorsatzgerätes 2 und der Betriebszustand der Korntankentleervorrichtung 22 deren Betreiben ist.
Erfindungsgemäß erstreckt sich die ausgelöste Reinigung nicht nur auf die Arbeitsorgane 28, sondern auf den gesamten von der Karosserie umschlossenen Bereich des Mähdreschers 1.
Das Reinigungsverfahren kann automatisch oder manuell durch den Fahrer der landwirtschaftlichen Arbeitsmaschine ausgelöst werden.
Voraussetzung ist zunächst, dass sich der Mähdrescher 1 im Erntebetrieb befindet, d.h. zumindest die Dreschorgane 4 des Mähdreschers 1 in Betrieb geschaltet sind. Ist dies der Fall, so wird in einem Schritt S 1 durch die innerhalb des Mähdreschers 1 angeordneten Sensoren 24 geprüft, ob sich Erntegut - Erntegutdurchsatz - innerhalb des Mähdreschers 1 befindet, welches noch den Dresch- und Reinigungsvorgang abschließend durchlaufen muss. Ist dem so, kann keine Reinigung erfolgen.
Bei nicht vorhandenem Erntegutdurchsatz kann in einem weiteren Schritt S 2 überprüft werden, ob das Vorsatzgerät 2 in Betrieb ist oder nicht.
Ist das Vorsatzgerät 2 nicht eingeschaltet und kein Erntegutdurchsatz vorhanden, setzt die automatische Organreinigung ein. Auf diesem Weg wird gewährleistet, dass sich das Erntegut zum Zeitpunkt des Reinigens weder innerhalb der Maschine befindet noch nachrücken kann, so dass ein Erntegutverlust durch das Ausblasen des Innenraums des Mähdreschers 1 nicht eintreten kann.
Soweit kein Erntegut im Mähdrescher 1 enthalten, das Vorsatzgerät 2 jedoch in Betrieb ist, wird oder kann weiterhin in einem Schritt S 3 überprüft werden, ob die Korntankentleervorrichtung 22 in Berieb ist. Wird die Korntankentleervorrichtung 22 betrieben, setzt die Reinigung der Organe automatisch ein. Auch hier kann es zu keinem Verlust kommen, da das bereits abgeerntete und gereinigte Korn in den Korntank abgefördert wurde und nicht mehr durch ein Ausblasen verlustig gehen kann. Diese weitere Verknüpfung dient als Sicherheitsschaltung um ein erntegutverlustfreies Reinigen zu erreichen.
Bei nicht eingeschalteter Korntankentleerung wird erneut der Kreislauf durchlaufen. Eine Reinigung bleibt in diesem Fall aus.

In weiterer vorteilhafter Ausgestaltung der Erfindung kann ein Reinigen beim Stillstand des Mähdreschers 1 erfolgen. Soweit sich der Mähdrescher 1 nicht fortbewegt kann zwangsweise kein Erntegut abgeerntet werden, so dass auch in dieser Konstellation die Reinigung erfolgen kann. Eine Reinigung beim Stillstand des Mähdreschers 1 beispielsweise nach Beendigung des gesamten Erntevorganges erforderlich um eine saubere Maschine abzustellen, oder aber auch vor dem Beginn eines neuen Erntevorganges um mit gereinigter Maschine die Ernte zu beginnen.

In nicht näher dargestellter Weise ist das Reinigen in zeitlichen Intervallen und / oder mit unterschiedlich starken Luftströmungen möglich.
Durch eine regelmäßige Reinigung wird der Mähdrescher 1 dauerhaft gesäubert, so dass Verschmutzungen relativ zeitnah entfernt werden und damit größere Verschmutzungen erst gar nicht entstehen können. Dies hat den Vorteil, dass geringere Drehzahlen des Motors erforderlich sind, die für das Erzeugen der Luftströmungen der Reinigungseinrichtung benötigt werden, da für weniger starke Verschmutzungen eine geringere Luftströmung notwendig ist. Gleichfalls werden Beschädigungen durch festsitzende Fremdkörper an den Sieblamellen verhindert.

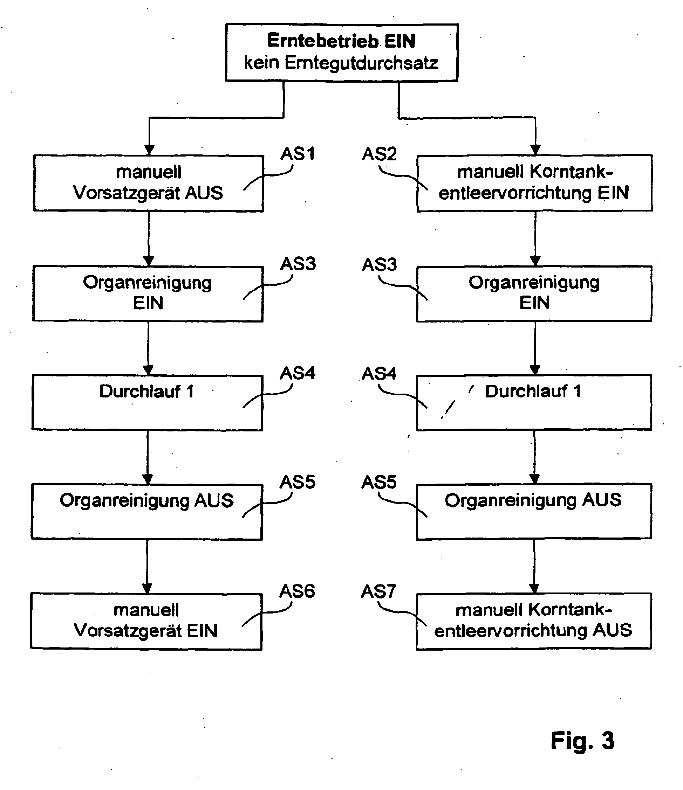

Die Figur 3 stellt im Gegensatz zur Figur 2 ein Flussdiagramm dar, wonach die Organreinigung aufgrund eines zuvor durch den Fahrer manuell ausgelösten Prozesses erfolgt.
Auch hier ist Bedingung, dass sich der Mähdrescher 1 im Erntebetrieb befindet und kein Durchsatz vorhanden ist.
Sodann wird durch einen Arbeitsschritt AS 1 durch die manuelle Betätigung das Vorsatzgerät 2 ausgeschaltet. Alternativ hierzu kann in einem von dem Arbeitsschritt AS 1 unabhängigen Arbeitsschritt AS 2 durch manuelle Betätigung die Korntankentleervorrichtung 22 eingeschaltet werden.
Durch die Vornahme der Arbeitsschritte AS 1 bzw. AS 2 setzt automatisch die Organreinigung in einem Arbeitsschritt AS 3 ein. Diese Reinigung kann aus einem einzigen Durchlauf in einem Arbeitsschritt AS 4 bestehen. Denkbar ist jedoch auch eine beliebige Erweiterung der Reinigungsphase.
Nach der erfolgten Reinigung setzt die Organreinigung in einem Arbeitsschritt AS 5 aus.

In einem letzten Arbeitsschritt AS 6 kann der Fahrer das Vorsatzgerät einschalten beziehungsweise in einem Arbeitsschritt AS 7 die Korntankentleervorrichtung 22 ausschalten und den Erntebetrieb wieder aufnehmen.

Diese Variante hat im Vergleich zu dem in Figur 2 abgebildeten Vorgang den Vorteil, dass das Reinigen eventgesteuert erfolgt, d.h. die Organreinigung wird nach Einleitung eines bestimmten Prozesses durch den Fahrer ausgelöst, wohingegen der in Figur 2 dargestellte Arbeitsprozess eine Dauerschleife durchläuft.

Erfindungsgemäß kann durch das abrupte Beenden der Korntankentleerung beziehungsweise durch ein erneutes Einschalten des Vorsatzgerätes 2 automatisch der Reinigungsvorgang gestoppt werden.

Es liegt im Rahmen der Erfindung, dass das beschriebene Verfahren nicht nur auf Mähdrescher 1 sondern an beliebigen landwirtschaftlichen Arbeitsmaschinen einsetzbar ist, um die beschriebenen Effekte zu erzielen.

### Bezugszeichenliste:

- 1: Mähdrescher
- 2: Vorsatzgerät
- 3: Schrägförderer
- 4: Dreschorgane
- 5: Dreschtrommel
- 6: Dreschkorb
- 7: Vorbereitungsboden
- 8: Fahrtrichtung
- 9: Leittrommel
- 10: Trenneinrichtung
- 15: Hordenschüttler
- 16: Rücklaufboden
- 17: Reinigungsaggregate
- 18: Obersieb
- 19: Untersieb
- 20: Reinigungsgebläse
- 21: Leitblech
- 22: Korntankentleervorrichtung
- 23: Vorbeschleunigungstrommel
- 24: Sensoren
- 25: Komtank
- 26: Maschineninnenraum
- 27: Reinigungseinrichtung
- 28: Arbeitsorgane
- 29: Elevator
- 30: Elevator

## Patentansprüche

1. Verfahren zur Reinigung der Arbeitsorgane innerhalb einer landwirtschaftlichen Arbeitsmaschine, insbesondere eines selbstfahrenden Mähdreschers, bestehend aus wenigstens einem Arbeitsorgan, einer Reinigungseinrichtung, einem Vorsatzgerät und einer Korntankentleervorrichtung,
**dadurch gekennzeichnet, dass**
der Reinigungsvorgang in Abhängigkeit von definierten Betriebszuständen eines oder mehrerer Arbeitsorgane (28) ausgelöst wird und wobei die definierten Betriebszustände des einen oder der mehreren Arbeitsorgane (28) im Erntebetrieb der landwirtschaftlichen Arbeitsmaschine erfasst werden.

2. Verfahren nach Anspruch 1,
**dadurch gekennzeichnet, dass**
das zumindest eine Arbeitsorgan das Vorsatzgerät (2) und dessen Betriebszustand der Stillstand des Vorsatzgerätes (2) ist.

3. Verfahren nach einem oder mehreren der vorangegangenen Ansprüche,
**dadurch gekennzeichnet, dass**
das zumindest eine Arbeitsorgan die Korntankentleervorrichtung (22) und dessen Betriebszustand das Betreiben der Korntankentleervorrichtung (22) ist

4. Verfahren nach einem oder mehreren der vorangegangenen Ansprüche,
**dadurch gekennzeichnet, dass**
die Reinigung parameterabhängig erfolgt.

5. Verfahren nach einem oder mehreren der vorangegangenen Ansprüche,
**dadurch gekennzeichnet, dass**
die Reinigung der Arbeitsorgane (28) in Abhängigkeit von wenigstens einem Parameter erfolgt.

6. Verfahren nach einem oder mehreren der vorangegangenen Ansprüche 4 oder 5,
**dadurch gekennzeichnet, dass**
die Parameter von dem Vorsatzgerätestillstand, dem Korntankentleerungsbe trieb, der Gebläsedrehzahl und/oder der Stellung der Arbeitsorgane (28) gebildet werden.

7. Verfahren nach einem oder mehreren der vorangegangenen Ansprüche 4 oder 5,
**dadurch gekennzeichnet, dass**
die Parameter von der Durchsatzmenge, der Erntegutart und/oder den Feuchtigkeitsverhältnisse gebildet werden.

8. Verfahren nach einem oder mehreren der vorangegangenen Ansprüche 4 bis 7,
**dadurch gekennzeichnet, dass**
die Parameter von wenigstens einem Sensor (24) erfasst wird.

9. Verfahren nach einem oder mehreren der vorangegangenen Ansprüche,
**dadurch gekennzeichnet, dass**
die Reinigung des wenigstens einen Arbeitsorgans (28) selbsttätig in Abhängigkeit von den Sensorsignalen und/oder manuell ausgelöst wird.

10. Verfahren nach einem oder mehreren der vorangegangenen Ansprüche,
**dadurch gekennzeichnet, dass**
die Reinigung in Form eines Ausblasens erfolgt.

11. Verfahren nach einem oder mehreren der vorangegangenen Ansprüche,
**dadurch gekennzeichnet, dass**
die Reinigung durch eine Erhöhung der Gebläsedrehzahl und/oder Öffnung der Siebe (18, 19) erfolgt.

12. Verfahren nach einem oder mehreren der vorangegangenen Ansprüche,
**dadurch gekennzeichnet, dass**
die Reinigung während der Verstellung der Arbeitsorgane (28) erfolgt

13. Verfahren nach einem oder mehreren der vorangegangenen Ansprüche,
**dadurch gekennzeichnet, dass**
die Verstellung der Arbeitsorgane (28) und das Ausblasen in Kombination erfolgt.

14. Verfahren nach einem oder mehreren der vorangegangenen Ansprüche,
**dadurch gekennzeichnet, dass**
die Arbeitsorgane (28) nach dem Reinigen in ihre Ausgangsstellung verfahren.

15. Verfahren nach einem oder mehreren der vorangegangenen Ansprüche,
**dadurch gekennzeichnet, dass**
die Reinigung nach und/oder während des Einstellens der Arbeitsorgane (28) erfolgt.

16. Verfahren nach einem oder mehreren der vorangegangenen Ansprüche,
**dadurch gekennzeichnet, dass**
die Reinigung den gesamten von der Karosserie umschlossenen Bereich erfasst.

17. Verfahren nach einem oder mehreren der vorangegangenen Ansprüche,
**dadurch gekennzeichnet, dass**
die Reinigung in zeitlichen Intervallen erfolgt.

18. Verfahren nach einem oder mehreren der vorangegangenen Ansprüche,
**dadurch gekennzeichnet, dass**
die Reinigung durch zumindest eine Reinigungseinrichtung (27) erfolgt.

19. Verfahren nach einem oder mehreren der vorangegangenen Ansprüche,
**dadurch gekennzeichnet, dass**
die Reinigungseinrichtung (27) aus wenigstens einem einstellbaren Gebläse (20) und einem einstellbaren Sieb (18, 19) besteht.

20. Verfahren nach einem oder mehreren der vorangegangenen Ansprüche,
**dadurch gekennzeichnet, dass**
das wenigstens eine Gebläse (20) an unterschiedlichen Stellen in und/oder an der landwirtschaftlichen Maschine angeordnet ist.

21. Verfahren nach Anspruch 1,
**dadurch gekennzeichnet, dass**
der Reinigungsvorgang in Abhängigkeit von definierten Betriebszuständen eines oder mehrerer Arbeitsorgane (28) und bei fehlendem Erntegutdurchsatz ausgelöst wird.

## Claims

1. A method of cleaning the working members within an agricultural working machine, in particular a self-propelled combine harvester, comprising at least one working member, a cleaning device, a front-mounted implement and a grain tank emptying device,
**characterised in that**
the cleaning operation is triggered in dependence on defined operating conditions of one or more working members (28) and wherein the defined operating conditions of the one or more working members (28) are detected in the harvesting operation of the agricultural working machine.

2. A method according to claim 1 **characterised in that** the at least one working member is the front-mounted implement (2) and the operating condition thereof is stoppage of the front-mounted implement (2).

3. A method according to one or more of the preceding claims **characterised in that** the at least one working member is the grain tank emptying device (22) and the operating condition thereof is operation of the grain tank emptying device (22).

4. A method according to one or more of the preceding claims **characterised in that** the cleaning operation is effected in parameter-dependent relationship.

5. A method according to one or more of the preceding claims **characterised in that** cleaning of the working members (28) is effected in dependence on at least one parameter.

6. A method according to one or more of preceding claims 4 and 5 **characterised in that** the parameters are formed by stoppage of the front-mounted implement, the grain tank emptying mode, the blowing device rotary speed and/or the position of the working members (28).

7. A method according to one or more of preceding claims 4 and 5 **characterised in that** the parameters are formed by the through-put amount, the kind of crop material and/or the moisture conditions.

8. A method according to one or more of preceding claims 4 to 7 **characterised in that** the parameters are detected by at least one sensor (24).

9. A method according to one or more of the preceding claims **characterised in that** cleaning of the at least one working member (28) is triggered automatically in dependence on the sensor signals and/or manually.

10. A method according to one or more of the preceding claims **characterised in that** cleaning is effected in the form of a blowing-out operation.

11. A method according to one or more of the preceding claims **characterised in that** cleaning is effected by an increase in the rotary speed of the blowing device and/or opening of the sieves (18, 19).

12. A method according to one or more of the preceding claims **characterised in that** cleaning is effected during displacement of the working members (28).

13. A method according to one or more of the preceding claims **characterised in that** displacement of the working members (28) and the blowing-out operation are effected in combination.

14. A method according to one or more of the preceding claims **characterised in that** the working members (28) move into their starting position after the cleaning operation.

15. A method according to one or more of the preceding claims **characterised in that** cleaning is effected after and/or during adjustment of the working members (28).

16. A method according to one or more of the preceding claims **characterised in that** the cleaning operation involves the entire region enclosed by the bodywork.

17. A method according to one or more of the preceding claims **characterised in that** cleaning takes place at time intervals.

18. A method according to one or more of the preceding claims **characterised in that** cleaning is effected by at least one cleaning device (27).

19. A method according to one or more of the preceding claims **characterised in that** the cleaning device (27) comprising at least one adjustable blowing device (20) and an adjustable sieve (18, 19).

20. A method according to one or more of the preceding claims **characterised in that** the at least one blowing device (20) is arranged at different locations in and/or on the agricultural machine.

21. A method according to claim 1 **characterised in that** the cleaning operation is triggered in dependence on defined operating conditions of one or more working members (28) and in the absence of a crop material through-put.

## Revendications

1. Procédé pour le nettoyage des organes de travail à l'intérieur d'une machine agricole, plus particulièrement une moissonneuse-batteuse automotrice comprenant au moins un organe de travail, un dispositif de nettoyage, un outil frontal et un dispositif de vidange de la trémie à grain, **caractérisé par le fait que** le processus de nettoyage est déclenché en fonction d'états de fonctionnement définis d'un ou de plusieurs organes de travail (28), les états de fonctionnement définis du ou des organes de travail (28) étant enregistrés pendant le travail de récolte de machine agricole.

2. Procédé selon la revendication 1, **caractérisé par le fait que** l'organe de travail au nombre d'au moins un est l'outil frontal (2) et que son état de fonctionnement est l'arrêt dudit outil frontal (2).

3. Procédé selon une ou plusieurs des revendications précédentes, **caractérisé par le fait que** l'organe de travail au nombre d'au moins un est le dispositif de vidange de la trémie à grain (22) et que son état de fonctionnement est le déclenchement dudit dispositif de vidange de la trémie à grain (22).

4. Procédé selon une ou plusieurs des revendications précédentes, **caractérisé par le fait que** le nettoyage a lieu en fonction de paramètres.

5. Procédé selon une ou plusieurs des revendications précédentes, **caractérisé par le fait que** le nettoyage des organes de travail (28) a lieu en fonction d'au moins un paramètre.

6. Procédé selon une ou plusieurs des revendications précédentes 4 ou 5, **caractérisé par le fait que** les paramètres sont constitués par l'arrêt de l'outil frontal, l'état de fonctionnement de vidange de la trémie à grain, la vitesse de rotation du ventilateur et/ou la position des organes de travail.

7. Procédé selon une ou plusieurs des revendications précédentes 4 ou 5, **caractérisé par le fait que** les paramètres sont constitués par le débit, la nature du produit récolté et/ou les conditions d'humidité.

8. Procédé selon une ou plusieurs des revendications précédentes 4 à 7, **caractérisé par le fait que** les paramètres sont mesurés par au moins capteur (24).

9. Procédé selon une ou plusieurs des revendications précédentes, **caractérisé par le fait que** le nettoyage de l'organe de travail (28) au nombre d'au moins un a lieu de manière automatique en fonction des signaux de capteurs et/ou est déclenché manuellement.

10. Procédé selon une ou plusieurs des revendications précédentes, **caractérisé par le fait que** le nettoyage se présente sous la forme d'un soufflage.

11. Procédé selon une ou plusieurs des revendications précédentes, **caractérisé par le fait que** le nettoyage a lieu par une augmentation de la vitesse de rotation du ventilateur et/ou l'ouverture des tamis (18, 19).

12. Procédé selon une ou plusieurs des revendications précédentes, **caractérisé par le fait que** le nettoyage a lieu pendant le déplacement des organes de travail (28).

13. Procédé selon une ou plusieurs des revendications précédentes, **caractérisé par le fait que** le déplacement des organes de travail (28) et le soufflage ont lieu en combinaison.

14. Procédé selon une ou plusieurs des revendications précédentes, **caractérisé par le fait que** les organes de travail (28), après le nettoyage sont ramenés dans leur position d'origine.

15. Procédé selon une ou plusieurs des revendications précédentes, **caractérisé par le fait que** le nettoyage a lieu après et/ou pendant le réglage des organes de travail (28).

16. Procédé selon une ou plusieurs des revendications précédentes, **caractérisé par le fait que** le nettoyage englobe toute la zone à l'intérieur de la carrosserie.

17. Procédé selon une ou plusieurs des revendications précédentes, **caractérisé par le fait que** le nettoyage a lieu à intervalles de temps.

18. Procédé selon une ou plusieurs des revendications précédentes, **caractérisé par le fait que** le nettoyage est effectué par au moins un dispositif de nettoyage (27).

19. Procédé selon une ou plusieurs des revendications précédentes, **caractérisé par le fait que** le dispositif de nettoyage (27) comprend au moins un ventilateur (20) réglable et un tamis (27, 28) réglable.

20. Procédé selon une ou plusieurs des revendications précédentes, **caractérisé par le fait que** le ventilateur (20) au nombre d'au moins un est disposé en des emplacements variables dans et/ou sur la machine agricole.

21. Procédé selon la revendication 1, **caractérisé par le fait que** le processus de nettoyage est déclenché en fonction d'états de fonctionnement définis d'un ou de plusieurs organes de travail (28) et en l'absence de débit de produit récolté.
